# EUROPEAN PATENT SPECIFICATION

(11) **EP 4 383 217 B1**
(45) Date of publication and mention of the grant of the patent: **08.04.2026**
(21) Application number: 22212635.1
(22) Date of filing: 09.12.2022
(51) Int. Cl.: G06V 20/58, G06V 20/52, G06V 40/10, B60K 28/00, G05D 1/243, G05D 1/246, G05D 105/28, G05D 107/70, G05D 109/10, G05D 111/10, G05D 1/633

(54) **PERSON DETECTION METHOD AND SYSTEM FOR COLLISION AVOIDANCE**
PERSONENERKENNUNGSVERFAHREN UND SYSTEM ZUR KOLLISIONSVERMEIDUNG
PROCÉDÉ ET SYSTÈME DE DÉTECTION DE PERSONNE POUR ÉVITER DES COLLISIONS

(43) Date of publication of application: 12.06.2024
(73) Proprietor: BlooLoc NV, 3500 Hasselt (BE)
(72) Inventor: Vandeweerd, Ivo, 3500 Hasselt (BE); Hendrikx, Leander, 3500 Hasselt (BE); Deforche, Koen, 3500 Hasselt (BE)
(74) Representative: Brantsandpatents bv

(56) References cited:
- EP-A1- 3 475 925
- WO-A1-2017/042677
- JINGWEI SONG ET AL: "Fusing Convolutional Neural Network and Geometric Constraint for Image-based Indoor Localization", ARXIV.ORG, CORNELL UNIVERSITY LIBRARY, 201 OLIN LIBRARY CORNELL UNIVERSITY ITHACA, NY 14853, 5 January 2022 (2022-01-05), XP091131886
- DE XU ET AL: "Ceiling-Based Visual Positioning for an Indoor Mobile Robot With Monocular Vision", IEEE TRANSACTIONS ON INDUSTRIAL ELECTRONICS, IEEE SERVICE CENTER, PISCATAWAY, NJ, USA, vol. 56, no. 5, 1 May 2009 (2009-05-01), pages 1617 - 1628, XP011250028, ISSN: 0278-0046

## Description

### FIELD OF THE INVENTION

The current invention relates to a method and system for collision avoidance, preferably in industrial settings, in circumstances comprising larger fleets of (industrial) vehicles.

### BACKGROUND

From DE 102 34 730 A1 a method for determining the position of a transport vehicle within an effective range is of known art, in which moveable first objects, transported by the transport vehicle, (transport units, pallet cages, beverage crates or similar) and stationary second objects (for example, walls, supporting pillars) are present. The effective range is stored in the form of a digital map, which contains the positions of the objects. The forklift truck has a laser radar (= LADAR), an electronic compass, and a kinematic GPS, connected with an on-board computer, which supply data to the on-board computer. For purposes of determining the position of the forklift truck the LADAR scans a contour of the environment and thereby registers the warehouse goods items located in the immediate environment, whereupon the result of this scan is compared with the digital map stored in a central computer; on the basis of this comparison the on-board computer or the central computer can determine a position of the forklift truck within the effective range. The LADAR also registers the separation distance between the forklift truck and the known objects, in order to generate an image of the forklift truck's environment. From the determined measurements the position of the forklift truck is determined by a comparison with the data of the digital map using trigonometrical calculations and methods. For purposes of improving the determination of position, data for moveable third objects can also be held in the digital map; these are registered during the scan and are used to update the database. These third objects can be other transport vehicles and/or unknown obstacles.

Disadvantageously the objects called upon for purposes of registering position must have a measurable contour so as to enable a determination of position by way of the laser scanning procedure. Therefore, identical objects (e.g. supporting pillars, Euro-pallets, etc.) cannot be uniquely identified. Moreover, in accordance with DE 102 34 730 A1 it is necessary to determine differences between the scans made by the vehicle and the centrally managed map so as to determine from these the exact position. This means that an exact determination of absolute position is not possible, instead a probable position is determined by way of an exclusion method; while in the best-case scenario this does indeed correspond to the actual absolute position, it can also deviate significantly from the latter. The determination of position by means of laser radar scanning in accordance with known art encounters its limitations in particular if the environment is similar or the distances involved prevent or place limits on the scanning procedure (e.g., in the case of an empty warehouse with supporting pillars, with empty storage areas, or storage areas with stored goods items that have identical structures, or in the external environment).

From US 2009/0198371 A1 a system for goods items tracking is furthermore of known art, with a fixed base system and mobile systems that are linked with vehicles. The mobile system has an identification sensor for purposes of registering objects with coding. The monitored space is also fitted with position markers that are individually different; these are arranged in the ceiling region. The vehicle has an optical position sensor device with a camera that is upwards directed; this records images of the environment so as to register position markers present in the visual field and to establish their identities. The positions of the position markers in the recorded image are used to register the position and the angular orientation of the vehicle. When a position marker is registered the database in the memory of a mobile computer system on the vehicle is also updated. However, this system has the disadvantage that no determination of position is possible if there is no marker in the field of view of the camera, i.e., no other system is available to execute a determination of position. Accordingly, a marker must be in the field of view at all locations where a position is required. In storage depots, however, a registration of position is required at all locations and at all times, in order to track even goods items that are set down in unscheduled storage areas. This in turn means that the storage depot must be fitted with very many markers; this leads to an extremely high level of expenditure, particularly in the case of large storage depots. Moreover, by virtue of the attachment of markers to the ceiling, this system of known art is disadvantageously limited to an internal environment.

From DE 44 29 016 A1 a navigation system for driverless vehicles, in particular for transport systems in workshops, is of known art, in which high-contrast objects in the environment, in particular ceiling lights, are recorded by means of an imaging sensor that moves with the vehicle. From the location of these ceiling lights the position and angle of orientation of the vehicle are then determined. Through the use of the high-contrast ceiling lights for the registration of an absolute reference position the costs of the navigation system are to be kept low. WO 2017/042677 A1 relates to a system for determining the position of a person using a camera installed on one or more vehicles, which know their position via GPS.

JINGWEI SONG ET AL: "Fusing Convolutional Neural Network and Geometric Constraint for Image-based Indoor Localization" relates to a method for indoor localization using a camera without relying on GPS.

Known systems for detecting persons, as discussed in this document, have the disadvantage of resulting in a lot of false positives, which make its application in industrial settings impossible, as it would create huge amounts of downtime. The opposite, increasing the threshold for positive detections, results in a highly dangerous environment where questionable detections are ignored, again creating an unacceptable situation.

Furthermore, what is crucial in these contexts, is that the reaction speed needs to be as high as possible. The processing of images into a decision on actual detection, and thus a potentially dangerous situation based on the presence of persons detected in that image, and then the subsequent further processing of this detection into an alarm action (or not), must be executed without latency.

The invention thereto aims to provide an improved methodology and system for person detection for vehicles in busy surroundings, where full visibility is not guaranteed.

### SUMMARY OF THE INVENTION

The present invention and embodiments thereof serve to provide a solution to one or more of above-mentioned disadvantages. To this end, the present invention relates to a method for person detection for collision avoidance in a location, preferably in industrial surroundings such as warehouses, with multiple industrial vehicles, preferably mobile material handling units such as forklifts, automated guided vehicles (AGVs), etc., according to claim 1.

Preferred embodiments of the device are shown in any of the claims 2 to 13.

In a second aspect, the present invention relates to a system for collision avoidance in a location, preferably in industrial surroundings such as warehouses, with multiple industrial vehicles, preferably mobile material handling units such as forklifts, automated guided vehicles (AGVs), etc., according to claim 14.

Preferred embodiments of the method are shown in claim 15.

### DESCRIPTION OF FIGURES

**Figure 1** shows a top view/floor plan for a situation in prior art collision avoidance systems.
**Figure 2** shows a top view/floor plan for a situation in prior art collision avoidance systems.
**Figure 3** shows a top view/floor plan for a situation in prior art collision avoidance systems.
**Figure 4** shows a top view for a situation in an embodiment according to the present invention.
**Figure 5** shows a top view for a situation in a variation embodiment according to the present invention.
**Figure 6** shows a top view for a situation in an embodiment according to the present invention.
**Figure 7** shows a floor plan for a situation in an embodiment according to the present invention, including a vehicle.
**Figure 8** shows a floor plan for a situation in an embodiment according to the present invention, including persons on the floor plan.
**Figure 9** shows an alarm contour drawn up for an industrial vehicle according to an embodiment of the invention.
**Figure 10** shows a floor plan for a situation in an embodiment according to the present invention, including industrial vehicles, people and alarm contours for the vehicles.

### DETAILED DESCRIPTION OF THE INVENTION

In a first aspect, the invention provides a method for person detection for collision avoidance in a location, preferably in industrial surroundings, more preferably warehouses, with multiple industrial vehicles, preferably a mobile material handling unit, said method comprising the following steps:
a. generating or updating a three-dimensional feature map of the location using an upwards-directed camera mounted on at least a first and a second, preferably all, of the industrial vehicles;
b. fitting said three-dimensional feature map onto a two-dimensional floor plan;
c. determining the absolute position of the first industrial vehicle on the floor plan using images from said upwards directed camera of said first industrial vehicle and the three-dimensional feature map;
d. determining the absolute position of the second industrial vehicle on the floor plan using images from said upwards directed camera of said second industrial vehicle and the three-dimensional feature map;
e. detecting a person on images from at least one laterally-directed camera mounted on the second industrial vehicle;
f. determining the relative position of said person on the floor plan relative to said second industrial vehicle based on said images;
g. determining the absolute position of said person on the floor plan by means of the relative position of said person to the second industrial vehicle and the absolute position of said second industrial vehicle on the floor plan; and
h. determining an alarm contour for the first industrial vehicle on said floor plan;
i. providing the absolute position of said person on the floor plan to the first industrial vehicle;

An alarm action is triggered for the first industrial vehicle if the absolute position of said person is detected inside the alarm contour of the first industrial vehicle.

The above methodology is specifically applicable to a fleet of industrial vehicles, which can be autonomous or operated by a driver (in loco or remotely). In locations, such as industrial warehouses, many such vehicles are present and on the move, while a number of 'pedestrians' are also present. In order to promote safety, safe zones are often designated, for instance footpaths, where pedestrians can walk safely, and where the vehicles are not allowed to drive, are automatically slowed and/or take other measures for safety. However, on many occasions, the pedestrians will still need to exit such safe zones for performing certain tasks and/or accessing certain zones. In order to safeguard the integrity of the pedestrians, further measures need to be taken, especially in industrial surroundings where the vehicles require high amounts of concentration to be operated (and often also are suboptimal in terms of providing a clear view for the driver), reducing the focus of the driver on their surroundings and such pedestrians. Finally, industrial surroundings typically also have a great amount of blind spots and obstacles for the visibility, such as racking, boxes, stacks of material, etc., resulting in a danger of a person appearing from around a corner when a driver does not expect them.

By providing most, and preferably all, of the industrial vehicles that are operational in a location with an upwards-directed camera and at least one laterally-directed camera (preferably more than one, to ensure a 360° vision), safety for all persons on in the location can be ensured, by the separate vehicles creating a moving mesh of person detection and localization nodes, that alerts (nearby) nodes when detecting a person with the location of said person. Using the upwards-directed camera for position determination of the industrial vehicles, by comparing the images of the upwards-directed camera to a previously generated three-dimensional map (or at least, to images generated therefrom). This previously generated map is not necessarily complete or definitive, as in principle, only a top section is relevant (for instance, only the ceiling can be realistically represented in said map), and can even be expanded/updated based on images from the cameras of the industrial vehicles, but serves as a point of comparison for the present images. When the image from the upwards-directed camera shows a sufficiently high degree of similarity (to be determined) to an image from the three-dimensional map, the position on the floor plan for said image of the three-dimensional map is set as the position of the industrial vehicle.

Alternative positioning systems exist, but are very susceptible to interference, especially in industrial surroundings. Typical odometry provides for results that diverge strongly over time, while typical correcting factors, such as signaling beacons, etc., are difficult to implement due to interference on the signals which renders the result unreliable. Visual odometry also has limited success, since the environment itself changes frequently (racking is changed, material in racks is moved, changed, etc.).

However, the applicant makes clever use of the fact that in such settings, there is always a high ceiling in which a number of points of recognition are provided. This is firstly in the shape of lighting on the ceiling, but can be appended by including skybridges, beams, windows, skylights, and other recognizable features. By defining a three-dimensional feature map with such points of recognition, the images from the previously generated three-dimensional map can be easily compared based with recognized features on the image from the upwards-directed camera.

By using such easily processable images (easily identifiable features, typically limited number of features but also few non-feature objects), the processing can be performed on the vehicle itself which is a preferred embodiment, with a relatively simple processing unit (compact, low power requirements).

The use of one or more laterally-facing cameras (with a view on the surroundings around eye-level, thus having a view on the floor as well as the space a person would occupy in the surroundings of the vehicle) to monitor the environment of the vehicle, means that the driver no longer needs to invest too much of their attention on this. Again, by using a processing unit that is preferably on the vehicle, presence of a person on the images can be identified easily and quickly, and the relative position of the person to the vehicle can be determined. Combining the relative position of the person with the known absolute position of the vehicle from the images of the upwards-directed camera, the absolute position of the person can be determined on the floor plan.

The relative position is typically determined by detecting the person in the image, usually via a bounding box on the image, and is achieved specifically by detecting the bottom boundary of the person (bounding box) corresponding to their feet. This bottom boundary can be mapped relatively to the camera, and to the vehicle, by knowledge of the camera position and orientation with respect to the vehicle, and the camera settings. By using that relative position, the projection of said person onto the floor plan can be determined, and therewith their absolute position on the floor plan.

This absolute position is provided, preferably directly, to other (nearby) industrial vehicles, which also know their own absolute position on the floor plan. The absolute position of the person(s) can be provided directly, for instance by broadcasting the absolute position of the person(s) to any vehicle close enough to receive the broadcast.

Broadcasting simplifies the communication of the absolute position of detected persons as it is simple, omnidirectional and low-range, and guarantees that the information is received by nearby vehicles, since detection of a person is of no relevance to faraway vehicles, which reduces computational activities for the vehicles overall. By using a low-latency wireless channel to broadcast the information, the check whether or not a person is in the alarm contour can be performed quickly, making sure a follow-up (alarm) reaction is executed in time.

The term "laterally-directed camera" comprises tilted cameras as well, and is used to refer to cameras that have a field of view that effectively cover the zone wherein a person would be present, i.e., on ground level. It can be advantageous to place the cameras with a (small) downward tilt, since it is often positioned at an elevation on the vehicle, which itself is often already high. Furthermore, this allows for a more accurate position detection, by having more of the ground (and other elements on the ground) in the field of view as a perspective for the person that is detected.

Each vehicles determines an individual alarm contour on the floor plan with respect to its own absolute position. This alarm contour defines the zone in which presence of a person is relevant for the vehicle, in terms of safety for the person and/or vehicle. This contour can be influenced by a number of factors, such as current speed, max speed, orientation, load, but can also be influenced by environmental factors such as obstacles and objects around it. For instance, where the alarm contour for a vehicle may for instance be set at 10 meter around it in every direction as a standard, this might mean that, when it is driving near racks, that the alarm contour also covers zones at the other side of the rack, while a person in such a zone on the other side is actually of no relevance for the vehicle. As such, the alarm contour can be adapted taking such factors into account, by cutting off zones when they are not reachable by the vehicle in a short amount of time. Of course, this depends on the floor plan being annotated with certain obstacles and relevant info about the obstacles (traversable, non-traversable).

A check is performed for a vehicle whether any of the received absolute positions for detected persons is inside of the alarm contour for the vehicle. If so, an alarm action is triggered. This alarm action can differ based on the relative position of the person to the vehicle. For instance, the alarm contour may be subdivided in an inner contour and an outer contour (and possible one or more intermediary contours), and/or may have zones, for which the alarm can be set independently. Gradations of the alarm actions can comprise full visual and/or auditory alarm signals, automated slowdown, automated stop, etc.

The advantage of the present system is that it allows monitoring in a reliable manner, with minimal additional hardware necessary on the vehicles, or outside of them, as the processing is preferably performed on the vehicles. In none of the prior art systems, the vehicles share their person detection information in such a highly informative, fast and reliable manner, critically increasing safety.

In alternative embodiments, the absolute position of the person(s) can also be sent indirectly to one or more other vehicles, by providing the info to an intermediary system (central server for instance), which in turn provides the info to one or more other vehicles (can be via broadcasting or direct transmittal to vehicles).

In further variations, the intermediary system can be provided with the absolute positions of the industrial vehicles as well as the absolute positions of the person(s), and can perform the steps off-vehicle, and then provide instructions directly to the vehicles separately (for instance, issue an alarm or trigger the alarm for vehicle 2 based on detection of a person by vehicle 1 at a location in the alarm contour of vehicle 2), instead of having the vehicles run the check of whether a person is in their alarm contour.

Preferably, processing of the images (both for person detection and position determination of vehicle and persons) is performed on the vehicles themselves. However, it should be noted that the processing of the images can be performed off-vehicle, although the on-vehicle processing is strongly preferred, as it does not require the images to be sent from the vehicle and allows faster reaction to alarm situations.

Preferably, multiple laterally-directed cameras are provided, in order to maximize the field of view. Most preferably, a full 360° view is desired, and three or more cameras are used to ensure this. In most cases, at least one forward-facing camera is used.

In a preferred embodiment, the step of determining the absolute position of the first and/or second industrial vehicle is carried out by means of particle filter localization technique (also known as Monte Carlo localization technique). Departing from an original position and orientation, the algorithm statistically predicts a distribution of positions (and orientations) at a later time based on further input (for instance information on speed, elapsed time, or sensor input such as from images, etc.), the so-called particles, which each represents a possible state (position, orientation) for the vehicle. For said particles, a corresponding feature image is generated from the three-dimensional feature map, and compared to the images from the actual upwards-directed camera. Based on the level of correspondence, the weights of the particles are adjusted (and particles are periodically resampled according to their weights) and used as the new distribution of positions (and orientation) for the vehicle, for the next iteration of the algorithm.

In industrial settings, much of the surroundings are temporary, and can be rearranged frequently. As mentioned, certain features at 'lower levels' are moved often, and are not reliable features for comparison with images at a later time, as these features, such as racks, stacks of materials, boxes, etc., may no longer be positioned at the same place. It is in this light that the applicant focuses on structural (quasi-permanent) components, that are rarely changed or moved (if at all), such as lighting configurations and structural characteristics at higher altitudes (skylights, beams, skybridges, windows, etc.). A further advantage of using imagery of higher zones of the location, is that they are more easily processed. The images have much less 'clutter' and are barer than images at ground level, where material, racking, people, machinery, etc., can be present, resulting in a more complex image that is harder to process for features. Additionally, the mentioned features are by themselves easy to identify.

Preferably, this three-dimensional feature map is generated with a high-accuracy mapping system, which does not necessarily need to be the same as the ones positioned on the vehicles. This can for instance be drawn up by a specific vehicle provided with specific imaging sensor(s) and positioning sensor(s) that allow more accurate figures, thus providing more reliable features, and high-accuracy positioning, guaranteeing that the drawn-up map is very reliable. The map can be updated and/or regenerated regularly, either via such a specifically designed mapping vehicle, but may also be updated based on the images from the industrial vehicles themselves while operational.

In a further preferred embodiment, the absolute position of the industrial vehicle is determined by comparison of an expected feature image for each particle in the particle filter localization technique based on the three-dimensional feature map with the image from the upwards directed camera. As mentioned, by generating an expected feature image for the particles, this can be compared in a very simple fashion to the "real" image from the camera. Focusing on the presence and relative position of the features allows fast and reliable comparison and provides a metric for determining which particle is most likely the actual position and orientation of the vehicle.

In an even preferred embodiment, the image from the upwards directed camera is processed into a feature image, wherein a probability density function is calculated for the particles in the particle filter localization technique, and wherein a most likely location is determined from the probability density function and set as the absolute position of the industrial vehicle. This absolute position is then sent to other vehicles, in order to check whether a person is present in their alarm contour.

In a preferred embodiment, the method comprises a step of calibrating the laterally-directed camera, which step includes mapping at least one, preferably at least 10% or even all, pixel on the images of said laterally-directed camera to a distance and direction relative to said industrial vehicle. The calibration step allows the method to very accurately determine the relative position of the person with respect to the vehicle, and thus a highly accurate absolute position which can be provided to the other vehicles nearby.

In a preferred embodiment, the laterally-directed camera is pre-calibrated. This pre-calibration comprises a very accurate determination of the characteristics for the camera (both operational, such as lens system, focus depth, etc., as well as the very exact position and inclination). This specifically means determining (or estimating) the camera matrix (with the intrinsic camera parameters) and distortion coefficients, and the extrinsic parameters (camera pose: location and orientation).

Based on these parameters, the position of an object or pixel on an image can be determined on a relative two-dimensional map with respect to the vehicle. As mentioned, this is usually achieved by detection of the person, generating a bounding box in the image for the person, of which the bottom (i.e., the feet of the person), is processed into a relative position with respect to the vehicle, which is then used to provide an absolute position projected onto the floor plan.

Preferably, every pixel in the image is processed to correspond to a specific location with respect to the vehicle, which is only achievable by careful calibration of the position and inclination of the laterally-directed camera on the vehicle. By focusing on the feet, the position of the person can be carefully mapped on the floor plan.

In a further preferred embodiment, the distance and direction to which a pixel is mapped are defined on a plane coincident with the floor supporting the material handling unit. In some embodiments, the angle pitch of travel direction of the unit is used in order to obtain the correct location projection on the floor plan.

In a further preferred embodiment, the position of a person relative to the industrial vehicle is determined by detecting a pixel coincident with a foot of said person, and determining the distance and direction to which said pixel is mapped.

In a preferred embodiment, the step of generating or updating the three-dimensional feature map is carried out using a simultaneous location and mapping (SLAM) approach.

In a preferred embodiment, the alarm contour of the industrial vehicle is calculated based on at least one of the following factors: speed of the industrial vehicle, driver reaction time, acceleration of the industrial vehicle, walking speed of detected person, mass and/or volume of the industrial vehicle, and direction of travel of the industrial vehicle. Further characteristics can be added to the above list, such as specific information on the industrial vehicle (for instance, time until stopping, max speed of the vehicle, turning radius of the vehicle, ...).

Most preferably, at least the present speed of the vehicle is taken into account as well as the direction of travel.

The alarm contour can be adapted further, depending on other factors. As mentioned, the presence of obstacles can be taken into account when generating the alarm contour, making sure that zones which are in practice unreachable due to such obstacles (for instance, wall, racking, etc.) are removed from the alarm contour so no unnecessary alarm actions are undertaken for persons detected there. Such adaptations can for instance make use of a maximal physical path that can be traversed by the vehicle within a certain time, making the alarm contour de facto a zone in which the vehicle can be expected to be within the certain time that can be set (for instance, next 10 seconds). Unreachable points are not present in the alarm contour that way, making it a realistic 'danger zone'. This can be easily implemented by making use of an annotated, and preferably regularly updated, floor plan, depicting all permanent, semi-permanent and temporary obstacles and barriers.

These obstacles and barriers may also include theoretical obstacles, such as zones in which the vehicles are not allowed to drive. Specifically, designated pedestrian zones are removed from the alarm contours in most cases, to avoid alarm actions occurring in normal situations. Thus, the floor clan may comprise at least one designated pedestrian zones, whereby the alarm action is not triggered if the absolute position of said person is detected inside the alarm contour of the first industrial vehicle and said absolute position is in one of the at least one designated pedestrian zones. These pedestrian zones are usually walkways.

As mentioned, the detection of a person in the alarm contour of a vehicle triggers an alarm action for the vehicle. These actions can comprise one or more measures, and can even be triggered dependent on the exact situation (proximity of person, speed of vehicle, direction of vehicle, etc.).

A preferred action is the automated slowing down of the vehicle. This can be to a slower pace in general, or the vehicle can be forced into 'crawl mode', where the vehicle can still move (as this is required by most national regulations), but is reduced to an absolute minimum, for instance 5 km/h, 2.5 km/h or even 1 or 0.5 of 0.25 km/h.

Other actions can be the triggering of visual indicators (flashing lights, lights, warnings on screens, etc.), auditory indicators (alarm signals), vibrational indicators (vibrations on seat, steering wheel, smartphone, etc.) and/or other indicators. These can even convey a directionality of the possible danger, for instance flashing light on side of the detected person.

In some embodiments, the person that is detected can also be provided with a warning, for instance via a dedicated mobile electronic device they are wearing (smartphone, or specific unit). This can be sent via optical recognition of the user on the images, but also via detection of the presence of the user via said mobile electronic device. In such an embodiment, the industrial vehicle detecting a person in their alarm contour can broadcast a short-range signal to trigger these electronic devices in warning.

In some occasions, depending on the proximity (for instance, if the alarm contour comprises one or more inner contours inside of the alarm contour, usually with a similar shape but smaller size), different actions can be taken, typically more drastic as the proximity is higher, for instance outer contour results into visual/auditory alarms, while presence in an intermediary contour results into a medium slowdown, and presence in the innermost contour results into full shutdown or extreme slowdown.

In a preferred embodiment, further information on person detection can be received from stationary cameras, positioned in or near the location. The fixed position thereof results in a reliable location for the detected person, which is again provided to one or more of the industrial vehicles, for instance via broadcasting the absolute position of the person. This can be particularly advantageous to solve specific blind spots or known hazardous zones, where vehicles provide rarely provide information.

In a preferred embodiment, the three-dimensional feature map is specifically built around features comprising (ceiling) lights, and is preferably augmented by also comprising skylights. Even more preferably, other quasi-permanent features are introduced, such as racking, gates and/or windows.

In particular, windows and/or other reflective surfaces are identified in the feature map, which knowledge is useful in filtering out "false" features recognized in the images from the upwards-directed camera, that are in fact duplicated features reflected in the windows/reflective surfaces. Knowledge of the position of windows and reflective surfaces, can be used to effectively remove these features, or compensate for them.

It is noted that presence of such reflective surfaces and windows is not necessary, as the incorrect detections can be filtered out via other means. For instance, this can be achieved by windows being recognized as such in the images (via a bounding box), and wherein the system is configured to disregard lights that are detected within the window.

In a second aspect, the invention relates to a system for person detection in collision avoidance for industrial vehicles in a location, preferably industrial surroundings, more preferably warehouses, wherein the system comprises a plurality of vehicle kits provided on each of the industrial vehicles, each kit comprising:
a. A first camera mounted on the industrial vehicle, directed upwards with respect to the vehicle;
b. At least one person detection camera mounted on the industrial vehicle, directed laterally with respect to the vehicle;
c. A processing unit configured for:
   a. determining an absolute position of the industrial vehicle on a predefined floor plan using images from said first camera of said industrial vehicle and a predefined three-dimensional feature map of the location;
   b. detecting a person on images from the person detection camera and determining the relative position of said person relative to said industrial vehicle based on said images on the floor plan;
   c. determining the absolute position of said person on the floor plan by means of the relative position of said person to the industrial vehicle and the absolute position of said industrial vehicle on the floor plan;
   d. determining an alarm contour for the industrial vehicle on said floor plan;
d. A wireless communication unit, configured for broadcasting the determined absolute position, and for receiving broadcasted determined absolute positions from other communication units.

The processing unit is further configured for executing an alarm action if the absolute position of a person is detected inside the alarm contour of the industrial vehicle.

The advantages discussed above for the first aspect of the invention apply here as well. With a limited additional hardware setup, the individual vehicles can operate as a person detection mesh, informing their 'neighbors' of any people on the floor, and taking the necessary steps if such people are detected in their alarm contour.

In a preferred embodiment, the system is configured for executing any of the methods of the first aspect.

For instance, the system may comprise one or more stationary camera kits, said stationary camera kits comprising a stationary camera, a wireless communication unit and a processing unit for detecting a person on images from said stationary camera and determining the absolute position of said detected person on the floor plan. The wireless communication unit is configured for broadcasting said absolute location, and the processing unit of the vehicle kits takes into account the absolute location received from the stationary camera kits for executing the alarm action.

Most preferably, at least two, three or more laterally directed cameras are provided on the vehicles, in order to ensure a full 360° field of view around the vehicles.

The invention is not limited to the disclosed exemplary embodiments, but by the scope of the appended claims.

### EXAMPLES AND DESCRIPTION OF FIGURES

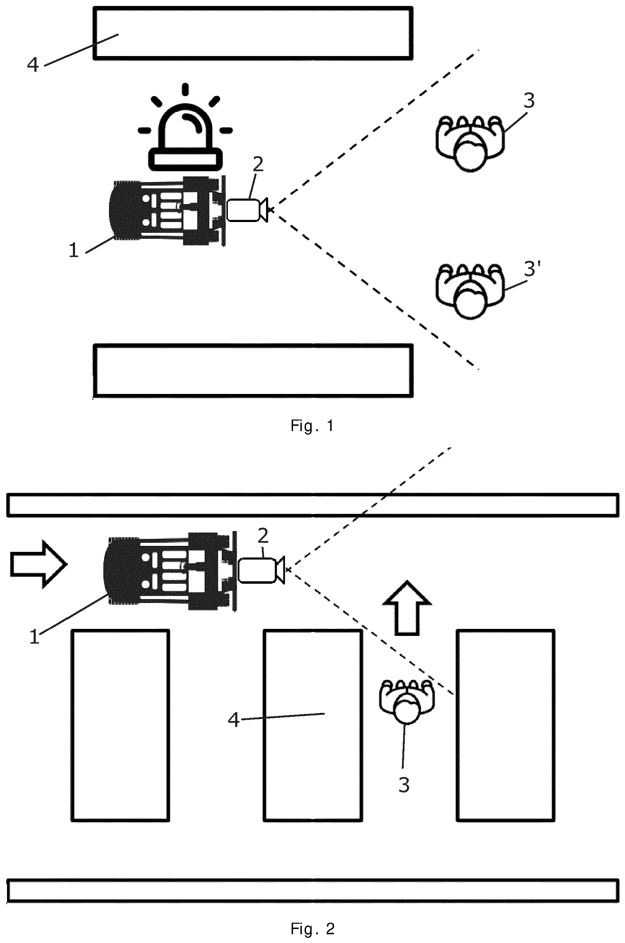

Figure 1 shows one of the classical types of person detection on factory floors. Each industrial vehicle (1) is provided with a camera (2), and an alarm is triggered when they detect a person (3) in their field of view. Some more complex systems determine a relative position for the person (close enough or not) which is taken into account for deciding whether or not to trigger the alarm. However, as mentioned, this does not allow for highly cluttered structures, typical for industrial warehouses, where the field of view for each vehicle is often limited, and they have no knowledge on people around a corner, behind a rack or a pallet, etc. Such a situation is shown in Fig. 2, where the person (3) coming from behind the corner of a rack (4) only enters the field of view of the industrial vehicle (1) at the last second, resulting in a dangerous situation.

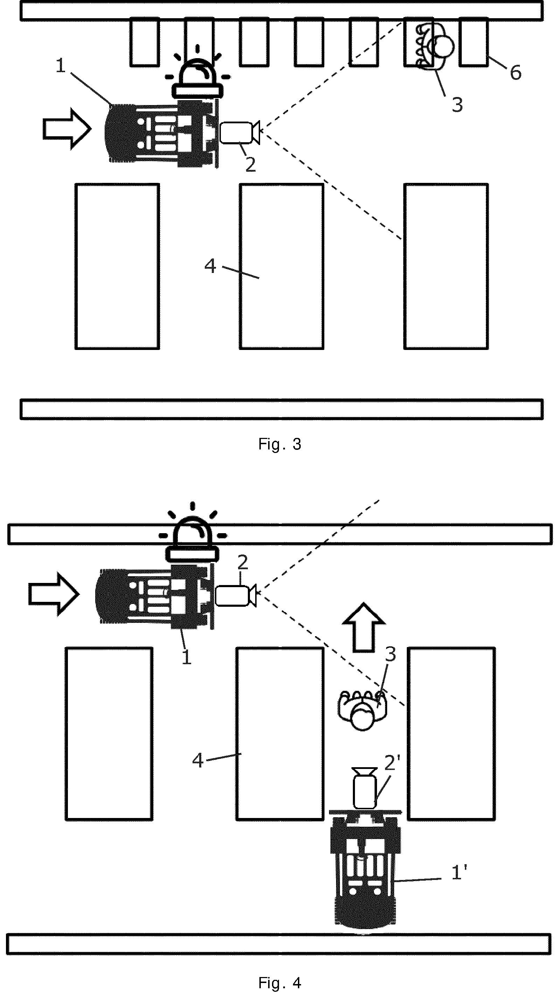

A further disadvantage of the known systems is shown in Fig. 3, where a pedestrian zone (foot path) is present on which persons can walk 'safely'. However, the person detection system in most of the prior art fails to recognize such provisions, as they function purely on image processing of the camera. In order to accommodate for such safe zones, the foot path would need to be marked in such a manner that it is identifiable on the images. However, given the fact that the identification can be hindered by light (low or high), dirt, obstacles, etc., all of which are factors that can be expected in industrial settings, the state of the art is not equipped to deal with this properly and reliably.

The present system is shown in Fig. 4, where a first and a second industrial vehicle (1, 1') are present, and shown on a floor plan on which racking (4) and other obstacles are shown. People (3) are also present. However, as in Fig. 2, the person (3) is not visible to the first industrial vehicle (1), but they are for the second industrial vehicle (1'). The laterally-directed camera of the second industrial vehicle (1') detects the presence of a person in their field of view, and processes the images with the person to determine a relative position for said person to the second industrial vehicle. The second industrial vehicle has knowledge of its own absolute position with respect to the location, and combines this with the relative position for the person, to determine an absolute position for said person, which is then broadcast. The first industrial vehicle (1) receives the information from the second industrial vehicle, and checks whether the person's absolute position is inside of the alarm contour for itself. If so, the necessary alarm actions are triggered.

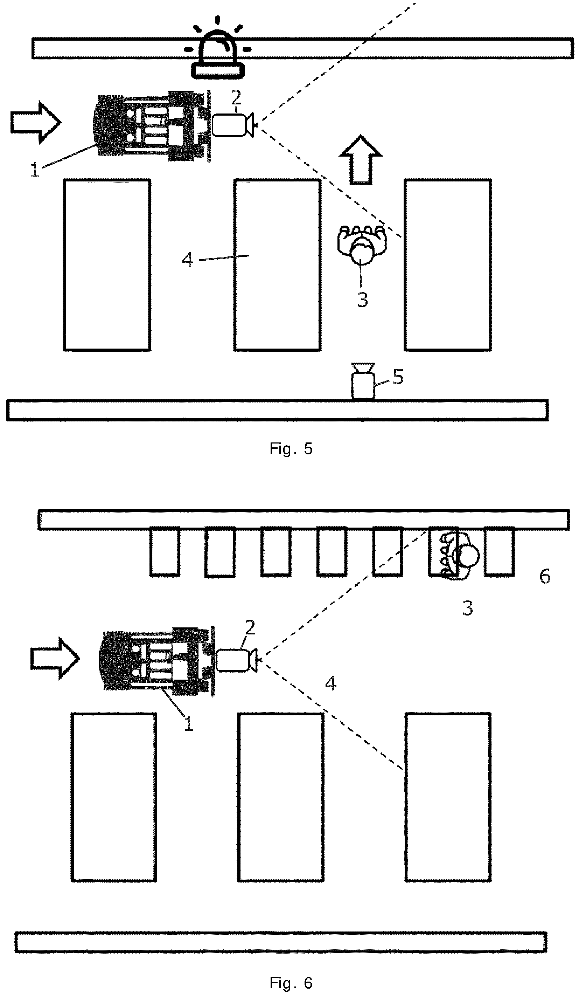

Fig. 5 shows an alternate version where a stationary camera (5) is present, which in this case serves the role of the second industrial vehicle (1') of Fig. 4, and alerts the first industrial vehicle (1) of the location of the person (3).

Fig. 6 shows a similar situation as Fig. 3, where a person (3) is in a pedestrian zone (6). In this case, the industrial vehicle detects the person by itself (but the methodology applies to persons detected by other vehicles as well, per the above broadcasting of the position). The industrial vehicle determines the relative position of the person, and combines it with (in this case its own) the absolute position of the vehicle, to determine the absolute position of the person. The pedestrian zone (6) is marked as such on the floor plan, and if the absolute position of the person (3) is detected as being in such a pedestrian zone, no alarm actions are undertaken.

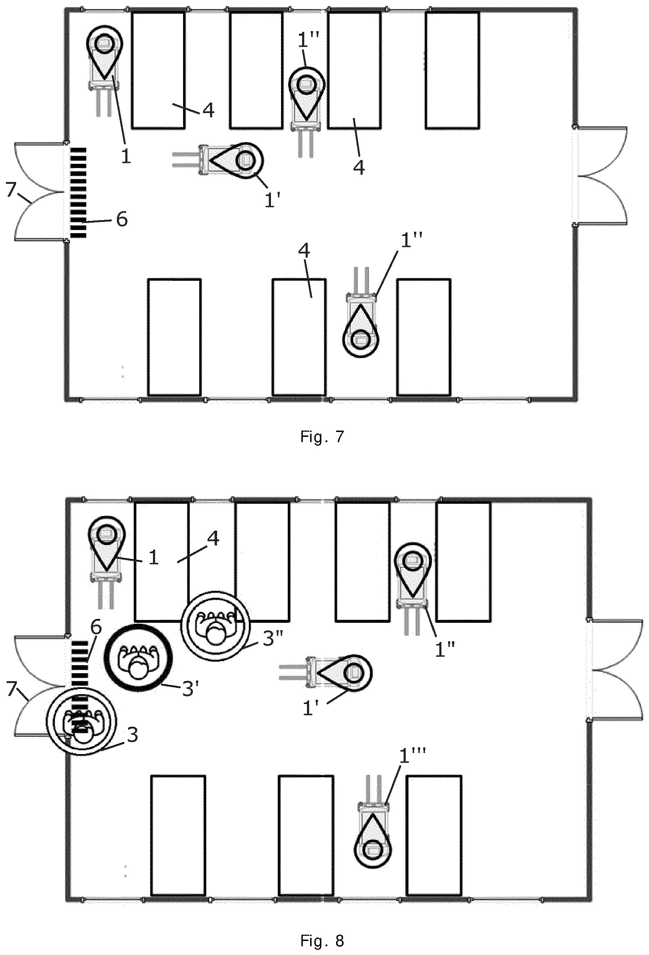

Fig. 7 shows a possible representation of the floor plan, wherein structural elements such as racking (4), doors (7), pedestrian zones (6), etc. are marked. The industrial vehicles (1, 1', 1", 1"') determine their positions on said floor plan.

Fig. 8 shows an embodiment of the floor plan, where three persons (3, 3', 3") are detected by the cameras of the industrial vehicles (1, 1', 1", 1‴), and possible stationary cameras. The top left industrial vehicle (1) can see some of the people (3, 3') but not the last person (3") who is hidden by the racking (4). By making use of the annotated floor plan, the industrial vehicle can see the person (1) on the pedestrian zone (6), who does not trigger an alarm, and knows to trigger the alarm for the second person. The third person (3") could theoretically fall in their alarm contour (absent in this figure), but the presence of the racking ensures that no alarm is triggered as said third person (3") behind the racking is not considered in danger/a danger for the industrial vehicle (1).

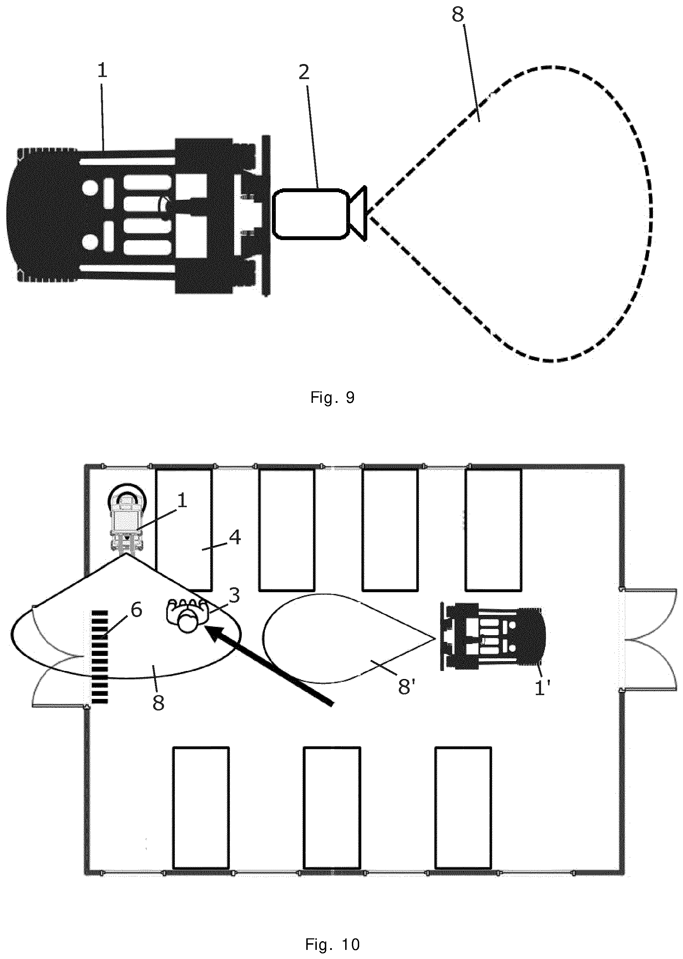

Fig. 9 shows a possible embodiment of an alarm contour (8) for a vehicle (1). Typically this is a forward-facing, balloon shaped contour, although in many cases, the contour can extend (to a lesser extend) to the sides and back of the vehicle.

As can be seen in Fig. 10, in which alarm contours (8, 8') are shown on the floor plan for two vehicles (1, 1'), these contours differ depending on the vehicle. This can be the result of the speed of the vehicle at the time, the type of vehicle, etc.

In Fig. 10, the person (1) would not be visible to the leftmost industrial vehicle (1), due to the racking (4) hiding them. However, the rightmost industrial vehicle (1') does have the person (3) in their field of view, and broadcasts its position to the other industrial vehicle (1), which triggers the alarm action for said industrial vehicle (1) since the position of the person on the floor plan is inside of the alarm contour (8) of the vehicle (1).

The invention is not limited to the disclosed exemplary embodiments, but by the scope of the following claims.

## Claims

1. Method for person detection for collision avoidance in a location, preferably in industrial surroundings, more preferably warehouses, with multiple industrial vehicles, preferably a mobile material handling unit, said method comprising the following steps:
a. generating or updating a three-dimensional feature map of the location using an upwards-directed camera mounted on at least a first and a second, preferably all, of the industrial vehicles;
b. fitting said three-dimensional feature map onto a two-dimensional floor plan;
c. determining the absolute position of the first industrial vehicle on the floor plan using images from said upwards directed camera of said first industrial vehicle and the three-dimensional feature map;
d. determining the absolute position of the second industrial vehicle on the floor plan using images from said upwards directed camera of said second industrial vehicle and the three-dimensional feature map;
e. detecting a person on images from at least one laterally-directed camera mounted on the second industrial vehicle;
f. determining the relative position of said person on the floor plan relative to said second industrial vehicle based on said images;
g. determining the absolute position of said person on the floor plan by means of the relative position of said person to the second industrial vehicle and the absolute position of said second industrial vehicle on the floor plan; and
h. determining an alarm contour for the first industrial vehicle on said floor plan;
i. providing the absolute position of said person on the floor plan to the first industrial vehicle,
wherein an alarm action is triggered for the first industrial vehicle if the absolute position of said person is detected inside the alarm contour of the first industrial vehicle.

2. The method according to previous claim 1, **characterized in that**, the step of determining the absolute position of the first and/or second industrial vehicle is carried out by means of particle filter localization technique.

3. The method according to the previous claim 2, **characterized in that**, the absolute position of the industrial vehicle is determined by comparison of an expected feature image for each particle in the particle filter localization technique based on the three-dimensional feature map with the image from the upwards directed camera.

4. The method according to the previous claim 3, wherein the image from the upwards directed camera is processed into a feature image, wherein a probability density function is calculated for the particles in the particle filter localization technique, and wherein a most likely location is determined from the probability density function and set as the absolute position of the industrial vehicle.

5. The method according to any previous claim, comprising a step of calibrating the laterally-directed camera, which step includes mapping at least one pixel on the images of said laterally-directed camera to a distance and direction relative to said industrial vehicle.

6. The method according to any previous claim, **characterized in that**, the step of generating or updating a three-dimensional feature map of the location is carried out using a simultaneous location and mapping (SLAM) approach.

7. The method according to any of the previous claims, **characterized in that**, the alarm contour of the industrial vehicle is calculated based on at least one of the speed, acceleration, mass, volume and direction of travel of the industrial vehicle.

8. The method according to any of the previous claims, **characterized in that**, the alarm action comprises reducing speed to a maximum of 5 km/h, preferably of 2.5 km/h, and a minimum of 1.0 km/h, preferably of 0.5 km/h.

9. The method according to any of the previous claims, **characterized in that**, the floor plan comprises at least one designated pedestrian zones, and wherein the alarm action is not triggered if the absolute position of said person is detected inside the alarm contour of the first industrial vehicle and said absolute position is in one of the at least one designated pedestrian zones.

10. The method according to any of the previous claims, **characterized in that**, each industrial vehicle broadcasts the absolute position of any person it detects.

11. The method according to any of the previous claims, wherein one or more fixed camera kits are positioned in the location, configured for detecting a person on images from said stationary camera kit and determining the absolute position of said detected person on the floor plan, wherein the stationary camera kit is configured for broadcasting said absolute location, and wherein the step of triggering the alarm action takes into account the absolute position received from the fixed camera kits.

12. The method according to any of the previous claims, wherein the three-dimensional feature map comprises ceiling lights as features, and optionally skylights, racking, gates, and/or windows.

13. The method according to the previous claim 12, wherein the features comprise windows and optionally other reflective surfaces, and wherein the step of determining the absolute position of the industrial vehicle accounts for reflections of features in said windows and optionally said other reflective surfaces.

14. System for person detection in collision avoidance for industrial vehicles in a location, preferably industrial surroundings, more preferably warehouses, wherein the system comprises a plurality of vehicle kits provided on each of the industrial vehicles, each kit comprising:
a. A first camera mounted on the industrial vehicle, directed upwards with respect to the vehicle;
b. At least one person detection camera mounted on the industrial vehicle, directed laterally with respect to the vehicle;
c. A processing unit configured for:
i. determining an absolute position of the industrial vehicle on a predefined floor plan using images from said first camera of said industrial vehicle and a predefined three-dimensional feature map of the location;
ii. detecting a person on images from the person detection camera and determining the relative position of said person relative to said industrial vehicle based on said images on the floor plan;
iii. determining the absolute position of said person on the floor plan by means of the relative position of said person to the industrial vehicle and the absolute position of said industrial vehicle on the floor plan;
iv. determining an alarm contour for the industrial vehicle on said floor plan;
d. a wireless communication unit, configured for broadcasting the determined absolute position, and for receiving broadcasted determined absolute positions from other communication units;
wherein said processing unit is further configured for executing an alarm action if the absolute position of a person is detected inside the alarm contour of the industrial vehicle.

15. System according to previous claim 14, **characterized in that**, the system comprises one or more stationary camera kits, said stationary camera kits comprising a stationary camera, a wireless communication unit and a processing unit for detecting a person on images from said stationary camera and determining the absolute position of said detected person on the floor plan, wherein the wireless communication unit is configured for broadcasting said absolute location, and wherein the processing unit of the vehicle kits takes into account the absolute location received from the stationary camera kits for executing the alarm action.

## Patentansprüche

1. Verfahren zur Personenerkennung zwecks Kollisionsvermeidung an einem Ort, vorzugsweise in Industrieumgebungen, bevorzugter in Warenlagern, mit mehreren Industriefahrzeugen, vorzugsweise einer mobilen Materialumschlageinheit, wobei das Verfahren die folgenden Schritte umfasst:
a. Erzeugen oder Aktualisieren einer dreidimensionalen Merkmalkarte des Ortes mit Hilfe einer nach oben gerichteten Kamera, die an mindestens einem ersten und einem zweiten, vorzugsweise allen, der Industriefahrzeuge montiert ist,
b. Anpassen der dreidimensionalen Merkmalkarte auf einen zweidimensionalen Lageplan,
c. Bestimmen der absoluten Position des ersten Industriefahrzeugs auf dem Lageplan unter Verwendung von Bildern von der nach oben gerichteten Kamera des ersten Industriefahrzeugs und der dreidimensionalen Merkmalkarte,
d. Bestimmen der absoluten Position des zweiten Industriefahrzeugs auf dem Lageplan unter Verwendung von Bildern von der nach oben gerichteten Kamera des zweiten Industriefahrzeugs und der dreidimensionalen Merkmalkarte,
e. Erkennen einer Person auf Bildern von mindestens einer zur Seite gerichteten Kamera, die an dem zweiten Industriefahrzeug montiert ist,
f. Bestimmen der relativen Position der Person auf dem Lageplan relativ zu dem zweiten Industriefahrzeug, basierend auf den Bildern,
g. Bestimmen der absoluten Position der Person auf dem Lageplan mittels der relativen Position der Person zu dem zweiten Industriefahrzeug und der absoluten Position des zweiten Industriefahrzeugs auf dem Lageplan, und
h. Bestimmen eines Warnumrisses für das erste Industriefahrzeug auf dem Lageplan,
i. Bereitstellen der absoluten Position der Person auf dem Lageplan für das erste Industriefahrzeug,
wobei eine Warnmaßnahme für das erste Industriefahrzeug ausgelöst wird, wenn die absolute Position der Person innerhalb des Warnumrisses des ersten Industriefahrzeugs erkannt wird.

2. Verfahren nach dem vorhergehenden Anspruch **1, dadurch gekennzeichnet, dass** der Schritt des Bestimmens der absoluten Position des ersten und/oder des zweiten Industriefahrzeugs mittels einer Technik zur Partikelfilterlokalisierung ausgeführt wird.

3. Verfahren nach dem vorhergehenden Anspruch 2, **dadurch gekennzeichnet, dass** die absolute Position des Industriefahrzeugs durch Vergleichen eines voraussichtlichen Merkmalbildes für jedes Partikel in der Technik zur Partikelfilterlokalisierung, basierend auf der dreidimensionalen Merkmalkarte, mit dem Bild von der nach oben gerichteten Kamera bestimmt wird.

4. Verfahren nach dem vorhergehenden Anspruch 3, wobei das Bild von der nach oben gerichteten Kamera zu einem Merkmalbild verarbeitet wird, wobei eine Wahrscheinlichkeitsdichtefunktion für die Partikel in der Technik zur Partikelfilterlokalisierung berechnet wird und wobei ein wahrscheinlichster Ort aus der Wahrscheinlichkeitsdichtefunktion bestimmt und als die absolute Position des Industriefahrzeugs gesetzt wird.

5. Verfahren nach einem vorhergehenden Anspruch, einen Schritt des Kalibrierens der zur Seite gerichteten Kamera umfassend, wobei der Schritt das Abbilden mindestens eines Pixels auf den Bildern der zur Seite gerichteten Kamera auf einen Abstand und eine Richtung relativ zu dem Industriefahrzeug umfasst.

6. Verfahren nach einem vorhergehenden Anspruch, **dadurch gekennzeichnet, dass** der Schritt des Erzeugens oder Aktualisierens einer dreidimensionalen Merkmalkarte des Ortes unter Verwendung eines Ansatzes zum gleichzeitigen Lokalisieren und Abbilden (SLAM) ausgeführt wird.

7. Verfahren nach einem der vorhergehenden Ansprüche, **dadurch gekennzeichnet, dass** der Warnumriss des Industriefahrzeugs basierend auf mindestens einem von Geschwindigkeit, Beschleunigung, Masse, Volumen und Fahrtrichtung des Industriefahrzeugs berechnet wird.

8. Verfahren nach einem der vorhergehenden Ansprüche, **dadurch gekennzeichnet, dass** die Warnmaßnahme das Verringern der Geschwindigkeit auf ein Maximum von 5 km/h, vorzugsweise 2,5 km/h, und ein Minimum von 1,0 km/h, vorzugsweise 0,5 km/h, umfasst.

9. Verfahren nach einem der vorhergehenden Ansprüche, **dadurch gekennzeichnet, dass** der Lageplan mindestens eine zugewiesene Fußgängerzone umfasst und wobei die Warnmaßnahme nicht ausgelöst wird, wenn die absolute Position der Person innerhalb des Warnumrisses des ersten Industriefahrzeugs erkannt wird und sich die absolute Position in einer der mindestens einen zugewiesenen Fußgängerzone befindet.

10. Verfahren nach einem der vorhergehenden Ansprüche, **dadurch gekennzeichnet, dass** jedes Industriefahrzeug die absolute Position einer Person, die es erkennt, rundsendet.

11. Verfahren nach einem der vorhergehenden Ansprüche, wobei ein oder mehrere Kameraausrüstungen an dem Ort positioniert sind, die dafür konfiguriert sind, eine Person auf Bildern von der stationären Kameraausrüstung zu erkennen und die absolute Position der erkannten Person auf dem Lageplan zu bestimmen, wobei die stationäre Kameraausrüstung dafür konfiguriert ist, die absolute Position rundzusenden, und wobei der Schritt des Auslösens der Warnmaßname die von den feststehenden Kameraausrüstungen empfangene absolute Position berücksichtigt.

12. Verfahren nach einem vorhergehenden Ansprüche, wobei die dreidimensionale Merkmalkarte Deckenleuchten als Merkmale und optional Dachfenster, Regale, Tore und/oder Fenster umfasst.

13. Verfahren nach dem vorhergehenden Anspruch 12, wobei die Merkmale Fenster und optional andere reflektierende Oberflächen umfassen und wobei der Schritt des Bestimmens der absoluten Position des Industriefahrzeugs Reflexionen von Merkmalen in den Fenstern und optional den anderen reflektierenden Oberflächen berücksichtigt.

14. System zur Personenerkennung bei der Kollisionsvermeidung für Industriefahrzeuge an einem Ort, vorzugsweise in Industrieumgebungen, bevorzugter in Warenlagern, wobei das System mehrere Fahrzeugausrüstungen umfasst, die jeweils an den Industriefahrzeugen bereitgestellt sind, wobei jede Ausrüstung Folgendes umfasst:
a. mindestens eine erste Kamera, die an dem Industriefahrzeug montiert und in Bezug auf das Fahrzeug nach oben gerichtet ist,
b. mindestens eine Personenerkennungskamera, die in Bezug auf das Fahrzeug seitlich ausgerichtet an dem Industriefahrzeug montiert ist,
c. eine Verarbeitungseinheit, die für Folgendes konfiguriert ist:
I. Bestimmen einer absoluten Position des Industriefahrzeugs auf einem vordefinierten Lageplan unter Verwendung von Bildern von der ersten Kamera des Industriefahrzeugs und einer vordefinierten dreidimensionalen Merkmalkarte des Ortes,
II. Erkennen einer Person auf Bildern von der Personenerkennungskamera und Bestimmen der relativen Position der Person relativ zu dem Industriefahrzeug, basierend auf den Bildern, auf dem Lageplan,
III. Bestimmen der absoluten Position der Person auf dem Lageplan mittels der relativen Position der Person zu dem Industriefahrzeug und der absoluten Position des Industriefahrzeugs auf dem Lageplan, und
IV. Bestimmen eines Warnumrisses für das Industriefahrzeug auf dem Lageplan,
d. eine Einheit zur drahtlosen Kommunikation, die dafür konfiguriert ist, die bestimmte absolute Position rundzusenden und rundgesendete bestimmte absolute Positionen von anderen Kommunikationseinheiten zu empfangen,
wobei die Verarbeitungseinheit ferner dafür konfiguriert ist, eine Warnmaßnahme auszuführen, wenn die absolute Position einer Person innerhalb des Warnumrisses des Industriefahrzeugs erkannt wird.

15. System nach Anspruch 14, **dadurch gekennzeichnet, dass** das System eine oder mehrere stationäre Kameraausrüstungen umfasst, wobei die stationären Kameraausrüstungen eine stationäre Kamera, eine Einheit zur drahtlosen Kommunikation und eine Verarbeitungseinheit zum Erkennen einer Person auf Bildern von der stationären Kamera und zum Bestimmen der absoluten Position der erkannten Person auf dem Lageplan umfassen, wobei die Einheit zur drahtlosen Kommunikation dafür konfiguriert ist, die absolute Position auszusenden und wobei die Verarbeitungseinheit der Fahrzeugausrüstungen die von den stationären Kameraausrüstungen empfangene absolute Position beim Ausführen der Warnmaßnahme berücksichtigt.

## Revendications

1. Procédé de détection de personnes pour l'évitement des collisions dans un lieu, de préférence dans un environnement industriel, plus préférentiellement dans un entrepôt, avec de multiples véhicules industriels, de préférence une unité mobile de manutention, ledit procédé comprenant les étapes suivantes :
a. la génération ou la mise à jour d'une carte d'éléments tridimensionnelle du lieu à l'aide d'une caméra orientée vers le haut montée sur au moins un premier et un second des véhicules industriels, de préférence tous ;
b. l'adaptation de ladite carte d'éléments tridimensionnelle à un plan d'étage bidimensionnel ;
c. la détermination de la position absolue du premier véhicule industriel sur le plan d'étage à l'aide d'images provenant de ladite caméra orientée vers le haut du premier véhicule industriel et de la carte d'éléments tridimensionnelle ;
d. la détermination de la position absolue du second véhicule industriel sur le plan d'étage à l'aide d'images provenant de ladite caméra orientée vers le haut du second véhicule industriel et de la carte d'éléments tridimensionnelle ;
e. la détection d'une personne sur des images provenant d'au moins une caméra orientée latéralement et montée sur le second véhicule industriel ;
f. la détermination de la position relative de ladite personne sur le plan d'étage par rapport au second véhicule industriel sur la base desdites images ;
g. la détermination de la position absolue de ladite personne sur le plan d'étage au moyen de la position relative de ladite personne par rapport au second véhicule industriel et de la position absolue dudit second véhicule industriel sur le plan d'étage ; et
h. la détermination d'un contour d'alarme pour le premier véhicule industriel sur ledit plan d'étage ;
i. la fourniture de la position absolue de ladite personne sur le plan d'étage au premier véhicule industriel,
dans lequel une action d'alarme est déclenchée pour le premier véhicule industriel si la position absolue de ladite personne est détectée à l'intérieur du contour d'alarme du premier véhicule industriel.

2. Procédé selon la revendication précédente 1, **caractérisée en ce que**, l'étape de détermination de la position absolue du premier et/ou du second véhicule industriel est effectuée au moyen d'une technique de localisation par filtre particulaire.

3. Procédé selon la revendication précédente 2, **caractérisé en ce que**, la position absolue du véhicule industriel est déterminée par comparaison d'une image d'éléments attendue pour chaque particule dans la technique de localisation par filtre particulaire basée sur la carte d'éléments tridimensionnelle avec l'image provenant de la caméra orientée vers le haut.

4. Procédé selon la revendication 3 précédente, dans lequel l'image provenant de la caméra orientée vers le haut est traitée en une image d'éléments, dans lequel une fonction de densité de probabilité est calculée pour les particules dans la technique de localisation par filtre particulaire, et dans lequel un emplacement le plus probable est déterminé à partir de la fonction de densité de probabilité et défini en tant que position absolue du véhicule industriel.

5. Procédé selon l'une quelconque des revendications précédentes, comprenant une étape d'étalonnage de la caméra orientée latéralement, laquelle étape comporte la mise en correspondance d'au moins un pixel sur les images de ladite caméra orientée latéralement avec une distance et une direction par rapport audit véhicule industriel.

6. Procédé selon l'une quelconque des revendications précédentes, **caractérisé en ce que**, l'étape de génération ou de mise à jour d'une carte d'éléments tridimensionnelle du lieu est effectuée à l'aide d'une approche de localisation et de cartographie simultanées (SLAM).

7. Procédé selon l'une quelconque des revendications précédentes, **caractérisé en ce que**, le contour d'alarme du véhicule industriel est calculé sur la base d'au moins l'un parmi vitesse, accélération, masse, volume et direction de déplacement du véhicule industriel.

8. Procédé selon l'une quelconque des revendications précédentes, **caractérisé en ce que**, l'action d'alarme comprend la réduction de la vitesse à un maximum de 5 km/h, de préférence à 2,5 km/h, et à un minimum de 1,0 km/h, de préférence à 0,5 km/h.

9. Procédé selon l'une quelconque des revendications précédentes, **caractérisé en ce que**, le plan d'étage comprend au moins une zone piétonne désignée, et dans lequel l'action d'alarme n'est pas déclenchée si la position absolue de ladite personne est détectée à l'intérieur du contour d'alarme du premier véhicule industriel et que ladite position absolue se trouve dans l'une de l'au moins une zone piétonne désignée.

10. Procédé selon l'une quelconque des revendications précédentes, **caractérisé en ce que**, chaque véhicule industriel diffuse la position absolue de toute personne qu'il détecte.

11. Procédé selon l'une quelconque des revendications précédentes, dans lequel un ou plusieurs kits de caméra fixe sont positionnés dans le lieu, configurés pour détecter une personne sur des images provenant dudit kit de caméra fixe et déterminer la position absolue de ladite personne détectée sur le plan d'étage, dans lequel le kit de caméra fixe est configuré pour diffuser ladite position absolue, et dans lequel l'étape de déclenchement de l'action d'alarme prend en compte la position absolue reçue à partir des kits de caméra fixe.

12. Procédé selon l'une quelconque des revendications précédentes, dans lequel la carte d'éléments tridimensionnelle comprend des lumières de plafond en tant qu'éléments, et éventuellement des puits de lumière, des rayonnages, des portes et/ou des fenêtres.

13. Procédé selon la revendication précédente 12, dans lequel les éléments comprennent des fenêtres et éventuellement d'autres surfaces réfléchissantes, et dans lequel l'étape de détermination de la position absolue du véhicule industriel tient compte des reflets des éléments dans lesdites fenêtres et éventuellement lesdites autres surfaces réfléchissantes.

14. Système de détection de personnes pour l'évitement des collisions pour des véhicules industriels dans un lieu, de préférence un environnement industriel, plus particulièrement un entrepôt, dans lequel le système comprend une pluralité de kits de véhicules installés sur chacun des véhicules industriels, chaque kit comprenant :
a. une première caméra montée sur le véhicule industriel, dirigée vers le haut par rapport au véhicule ;
b. au moins une caméra de détection de personnes montée sur le véhicule industriel, dirigée latéralement par rapport au véhicule ;
c. une unité de traitement configurée pour :
i. déterminer une position absolue du véhicule industriel sur un plan d'étage prédéfini à l'aide d'images provenant de ladite première caméra dudit véhicule industriel et d'une carte d'éléments tridimensionnelle prédéfinie du lieu ;
ii. détecter une personne sur des images provenant de la caméra de détection de personnes et déterminer la position relative de ladite personne par rapport audit véhicule industriel sur la base desdites images sur le plan d'étage ;
iii. déterminer la position absolue de ladite personne sur le plan d'étage au moyen de la position relative de ladite personne par rapport au véhicule industriel et de la position absolue dudit véhicule industriel sur le plan d'étage ;
iv. déterminer un contour d'alarme pour le véhicule industriel sur ledit plan d'étage ;
d. une unité de communication sans fil, configurée pour diffuser la position absolue déterminée, et pour recevoir des positions absolues déterminées diffusées à partir d'autres unités de communication ;
dans lequel ladite unité de traitement est en outre configurée pour exécuter une action d'alarme si la position absolue d'une personne est détectée à l'intérieur du contour d'alarme du véhicule industriel.

15. Système selon la revendication précédente 14, **caractérisé en ce que**, le système comprend un ou plusieurs kits de caméra fixe, lesdits kits de caméra fixe comprenant une caméra fixe, une unité de communication sans fil et une unité de traitement pour détecter une personne sur des images provenant de ladite caméra fixe et déterminer la position absolue de ladite personne détectée sur le plan d'étage, dans lequel l'unité de communication sans fil est configurée pour diffuser ladite position absolue, et dans lequel l'unité de traitement des kits de véhicules prend en compte la position absolue reçue à partir des kits de caméra fixe pour exécuter l'action d'alarme.
